# EUROPEAN PATENT SPECIFICATION

(11) **EP 4 215 417 B1**
(45) Date of publication and mention of the grant of the patent: **13.03.2024**
(21) Application number: 22153023.1
(22) Date of filing: 24.01.2022
(51) Int. Cl.: B60R 7/04, B60N 2/75

(54) **A CONSOLE BOX ASSEMBLY**
KONSOLENKASTENANORDNUNG
ENSEMBLE BOÎTE DE CONSOLE

(43) Date of publication of application: 26.07.2023
(73) Proprietor: Marelli Corporation, Saitama-shi, Saitama 331-8501 (JP)
(72) Inventor: BOITCEV, Andrei, Milton Keynes, MK9 4AE (GB); PATANKAR, Kalpak, Milton Keynes, MK10 9RP (GB)
(74) Representative: Haseltine Lake Kempner LLP

(56) References cited:
- FR-A1- 3 109 120

## Description

### Technical Field

The present disclosure relates to a console box for a vehicle, such as a motor vehicle, and is particularly, although not exclusively, concerned with an adjustable console box for a motor vehicle with improved durability.

### Background

Vehicles, such as motor vehicles, often comprise a centre console unit including a console box defining a storage area for occupants of the vehicle to store items in during a journey in the vehicle. The console box may comprise a lid for closing the storage volume to secure the items within the storage volume.

Console boxes typically comprise an arm rest for an occupant of the vehicle, such as the driver, to rest their arm on whilst travelling in the vehicle. It is often desirable for the position of the arm rest to be adjustable, so that the occupant can arrange the arm rest in an ergonomically advantageous position. When the arm rest is to be used by the driver, the driver may wish to secure the position of the arm rest in a suitable position to allow the driver to reach and operate vehicle controls whilst their arm is resting on the arm rest. Document FR 3109120 A1 discloses a console box assembly according to the preamble of claim 1.

It is desirable for the durability of a mechanism for adjusting and securing the position of the arm rest to be improved.

### Statements of Invention

According to an aspect of the present disclosure, there is provided a console box assembly comprising a carrier and an arm rest configured to slide relative to a carrier, the console box assembly further comprising: a rod coupled, e.g. fixedly coupled, to one of the carrier and the arm rest, wherein the rod is elongate in a direction in which the arm rest is configured to slide relative to the carrier; and a slide lock mechanism coupled, e.g. fixedly coupled, to the other of the carrier and the arm rest, wherein the slide lock mechanism is configured to selectively engage the rod in order to restrict sliding of the arm rest relative to the carrier, wherein the slide lock structure comprises: a first bush disposed about the rod, the first bush comprising an internal surface configurable to contact the rod, and a slope surface on opposite side of the first bush from the internal surface; a second bush configurable to engage the first bush at the slope surface in order to urge the internal surface of the first bush against the rod; an actuator to drive the second bush between a first position, in which the second bush engages the first bush and urges the internal surface of the first bush against the rod, and a second position, in which the second bush is disengaged from, or less engaged with the first bush, e.g. such that the internal surface of the first bush is not urged against the rod, or is urged against the rod with reduced force compared to the first position; and a biasing element configured to bias the second bush into the first position.

The first bush may be made from a material having a lower hardness than a material of the rod, e.g. a lower hardness than a metal material, such as steel or aluminium. For example, the first bush may be made from a polymer material.

The biasing element may be spaced apart from the rod, e.g. when the second bush is in or between the first and second positions. In other words, the biasing element may not be in contact with rod. For example, the biasing element may comprise a coil spring disposed about the rod.

One of the second bush and the actuator may comprises a cam surface and the other of the second bush and the actuator may comprise a cam follower to engage the cam surface. The actuator may be configured to drive the second bush between the first and second positions by virtue of the engagement between the cam surface and the cam follower.

The cam surface may comprise a groove formed in a surface, e.g. an outer surface, of the second bush or actuator. The cam surface may comprise a helical grove formed in the surface of the second bush or actuator. The cam follower may comprise a pin received within the groove.

The console box assembly may further comprise a slide lock mechanism actuator configured to be displaced by a user and actuate the actuator. The console box assembly may further comprise a torsion bar mounted on the arm rest for pivotal movement about a torsion bar pivot axis. The torsion bar may be configured to translate movement of the slide lock mechanism actuator to actuate the actuator.

The torsion bar pivot axis may be aligned with a direction having a component parallel with the elongate direction of the rod. The torsion bar may comprise a ramp surface and the slide lock mechanism actuator may comprise a ramp engaging surface. The ramp engaging surface may be configured to engage the ramp surface when the slide lock mechanism actuator is moved to urge the torsion bar to pivot about torsion bar pivot axis. The ramp surface and the ramp engagement surface may comprise arcuate surfaces.

The slide lock mechanism actuator may comprises a body portion mounted on the arm rest for pivotal movement about a slide lock mechanism actuator pivot axis. The ramp engagement surface may be formed on a tab extending from a body portion in a direction with a component perpendicular to the slide lock mechanism actuator pivot axis. The slide lock mechanism actuator pivot axis may be at an angle, e.g. perpendicular, relative to the torsion bar pivot axis.

The ramp engagement surface may be arcuate about an axis with a component perpendicular to the slide lock mechanism actuator pivot axis, or ramped in a direction perpendicular to the slide lock mechanism actuator pivot axis. The ramp surface may be arcuate about an axis with a component perpendicular to the torsion bar pivot axis, or ramped in a direction perpendicular to the torsion bar pivot axis.

The torsion bar may comprise an actuator engaging surface for engaging the actuator to transmit the translated movement to the actuator. The actuator engaging surface may extend along the torsion bar in a direction with a component parallel with the direction in which the arm rest is configured to slide relative to the carrier.

The actuator engaging surface may extend along the torsion bar in the direction with a component parallel to the direction in which the arm rest is configured to slide by a distance greater than a distance that the arm rest slides.

According to another aspect of the present disclosure, there is provided a console box assembly comprising: an armrest having an upper body and a lower body; and a height adjustment mechanism for adjusting a height between an upper surface of the upper body and a lower extent of the lower body, wherein the height adjustment mechanism comprises: a scissor linkage mechanism comprising: a first link member having a first end and a second end, wherein the first end is pivotally coupled to the lower body; and a second link member having a first end and a second end, wherein the first end is pivotally and slideably coupled to the lower body, wherein the first and second link members are pivotally coupled together at a position between the first and second ends of the first and second link members, and wherein the second ends of the first and second link members are arranged to contact the upper body and prevent the distance between the upper surface of the upper body and a lower extent of the lower body reducing to less than a distance between the first and second ends of the first and second link member; a first rack coupled to the first end of the second link member; a second rack coupled to the lower body, wherein the first and second racks are configured to engage one another in order to restrict movement of the first rack relative to the second rack in a direction in which the first end of the second link member slides relative to the lower body; and an actuator for selectively disengaging the second rack from the first rack.

The console box assembly may further comprise a biasing element for biasing the first and second link elements to pivot relative to one another in order to increase the distance between the first and second ends of the first and second link members respectively in the height direction.

The console box assembly may further comprise a damping element arranged to damp pivoting movements of the first and second link members relative to one another. The damping element may be coupled to the lower body. The damping element may be a rotational damper comprising a gear engaged with first rack.

The second rack may be pivotally coupled to the lower body. The actuator may be configured to pivot second rack to disengage second rack from first rack. The first and second link members may be housed inside the lower body and/or the upper body.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

For a better understanding of the present invention, and to show more clearly how it may be carried into effect, reference will now be made, by way of example, to the accompanying drawings, in which:
Figure 1 is a side cross-sectional view of a console box assembly, according to arrangements of the present disclosure, in a rear position with a slide lock mechanism engaged;
Figures 2a and 2b are partial side cross-sectional views of a slide lock mechanism for the console box assembly shown in Figure 1, in engaged and disengaged configurations respectively;
Figure 3 is a side cross-sectional view of the console box assembly in a forward position with a slide lock mechanism disengaged;
Figures 4a and 4b are partial bottom views of the console box assembly shown in Figures 1, illustrating components of the console box assembly when the slide lock mechanism is engaged and disengaged respectively;
Figure 5a is a front cross-sectional view of the console box assembly with the slide lock mechanism engaged;
Figure 5b is a front cross-sectional view of the console box assembly with the slide lock mechanism disengaged;
Figure 6a is a side cross-sectional view of the console box assembly, with a height adjustment mechanism being locked in a lowered configuration;
Figure 6b is a side cross-sectional view of the console box assembly, with the height adjustment mechanism being unlocked in a raised configuration; and
Figure 7 is a perspective view of a scissor mechanism for the height adjustment mechanism shown in Figures 8a and 8b.

### Detailed Description

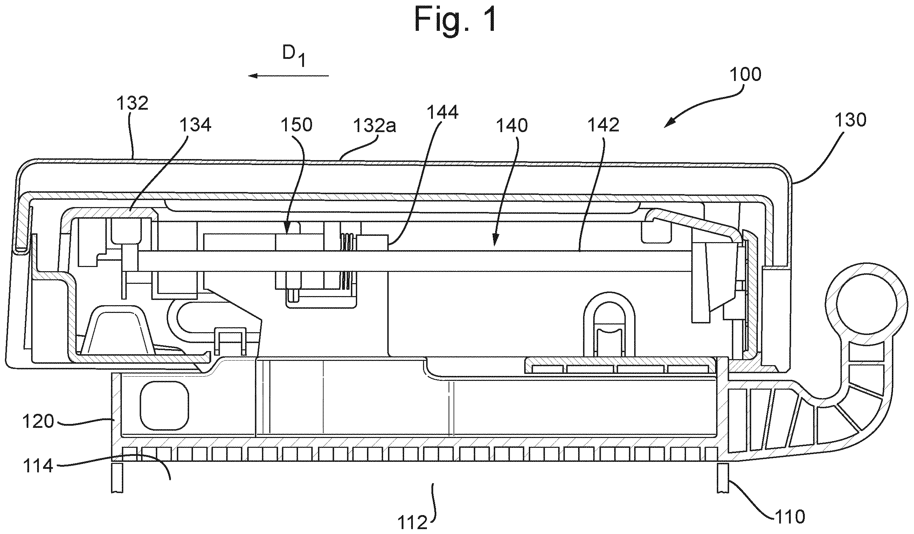

With reference to Figure 1, a console box assembly 100 for a vehicle, such as a motor vehicle, according to arrangements of the present disclosure, comprises a box body 110, a carrier 120 and an armrest 130. The console box assembly 100 may be mounted, e.g. fixedly mounted, within a vehicle interior. For example, the box body 110 of the console box assembly 100 may be configured to be fixedly mounted adjacent to a seat of the vehicle. In one or more arrangements, the console box assembly 100 may be to form at least part of a centre console for the vehicle.

The box body 110 may define a storage volume 112, e.g. for items to be stored within the console box assembly. The carrier 120 and/or the armrest 130 may be configured to form a lid for closing, e.g. covering, an opening 114 into the storage volume 112. For example, the carrier 120 may be movably, e.g. pivotally, mountable relative to the box body 110 in order to form the lid for selectively closing the opening 114.

The armrest 130 may be further configured to provide an ergonomic surface for an occupant of vehicle to rest their arm on, e.g. when travelling in or driving the vehicle. In order to improve the ergonomic function of the armrest 130, the position of the armrest 130 may be adjustable relative to the carrier 120 and/or the box body 110. In particular, the armrest 130 may be movable, e.g. slideably movable, relative to the carrier 120 and/or box body 110 in a sliding direction D₁. In this way, the position of the armrest 130 relative to the seat of the vehicle may be adjusted. When the console box assembly 100 is installed within a vehicle, the sliding direction D₁ of the armrest 130 may be at least partially aligned with a direction in which the seat of the vehicle faces, e.g. a longitudinal direction of the vehicle. In the arrangement depicted, the sliding direction D₁ is aligned with a longitudinal direction of the console box assembly 100.

The armrest 130 may comprise an upper body 132 and a lower body 134. The ergonomic surface of the armrest may be provided by the upper body 132. For example, the ergonomic surface may be an upper surface 132a of the upper body. The upper body 132 may be movably coupled to the lower body 134. For example, the upper body 132 may be pivotally coupled to the lower body 134. As described below, moving, e.g. pivoting, the upper body 132 relative to the lower body 134 may actuate a mechanism of the armrest 130, such as a mechanism for locking the position of the armrest relative to the carrier 120.

The console box assembly 100 further comprises a mechanism 140 for enabling the armrest 130 to be moved relative to the carrier 120. For example, the mechanism 140 may be a sliding mechanism for enabling the armrest 130 to be displaced, e.g. slid, relative to the carrier 120. For example, the mechanism may enable the armrest 130 to slide relative to the carrier in the sliding direction D₁. In this way, the position of the ergonomic surface 132a of the armrest may be selectively adjusted.

As depicted in Figure 1, the sliding mechanism 140 comprises a rod 142 and a slide lock mechanism 150. The rod 142 may be elongate and may be arranged to extend in a direction parallel with the sliding direction D₁ of the armrest 130. The rod 142 may be coupled, e.g. fixedly coupled, to one of the armrest 130 and the carrier 120. The rod 142 may be coupled, e.g. slideably coupled, to the other of the armrest 130 and the carrier 120. For example, the rod 142 may be received within an opening 144 formed in the other of the armrest 130 and the carrier 120. In the arrangement shown in Figure 1, the rod 142 is coupled to the armrest 130 and is received within the opening 144 formed in the carrier 120. In this way, the rod 142 and opening 144 facilitate, e.g. guide, movement, e.g. sliding, of the armrest 130. In particular, the rod 142 and opening 144 may facilitate sliding of the armrest 130 in the sliding direction D₁ relative to the carrier 120.

The slide lock mechanism 150 is coupled, e.g. fixedly coupled, to the other of the armrest 130 and the carrier 120, e.g. to the one of the armrest 130 and the carrier 120 in which the opening 144 is formed. The slide lock mechanism 150 is configured to selectively engage the rod 142 in order to resist or restrict sliding of the armrest 130 relative to the carrier 120.

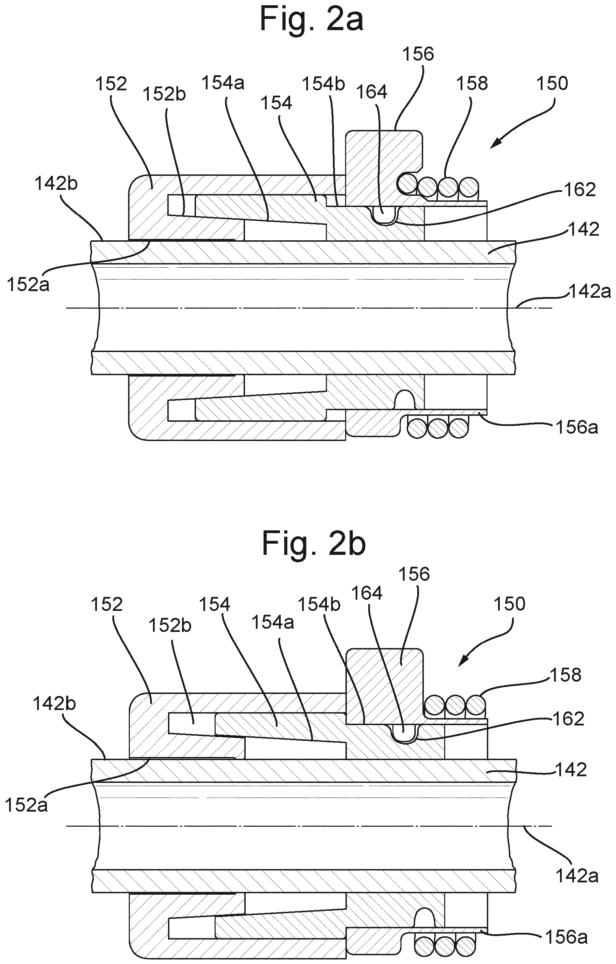

With reference to Figures 2a and 2b, the slide lock mechanism 150 comprises a first bush 152, a second bush 154 and a bush actuator 156. The components of the slide lock mechanism, e.g. the first bush 152, second bush 154 and/or the bush actuator 156, may be disposed about the rod 142. Figures 2a and 2b illustrate a cross-section though the slide lock mechanism 150 and the rod 142, and it will be appreciated that a shape of at least a portion of one or more of the components 152, 154, 156 of the slide lock mechanism may be constant about a central axis 142a of the rod 142.

The first bush 152 comprises an internal surface 152a configurable to contact the rod 142, e.g. an outer surface 142b of the rod 142. The first bush 152 further comprises an opposing surface 152b on an opposite side of the first bush 152 from the internal surface 152a. For example, the opposing surface 152b may be an external surface of the first bush 152.

The second bush 154 is configurable to engage the opposing surface 152b of the first bush. The first and second bushes 152, 154 may be configured such that when the second bush 154 engages the opposing surface 152b of the first bush, the internal surface 152a of the first bush is urged against the rod 142. For example, as depicted in Figures 2a and 2b, the opposing surface 152b may be sloped or ramped and the second bush 154 may comprise a complementary ramped surface 154a arranged to engage the ramped surface 152b of the first bush to urge the internal surface 152a against the rod 142.

The bush actuator 156 is configured to drive the second bush 154 between a first position, depicted in Figure 2a, in which the second bush 154 engages the first bush 152, e.g. the opposing surface 152b of the second bush, to urge the internal surface 152a of the first bush against the rod 142, and a second position, depicted in Figure 2b, in which the second bush 154 does not engage the first bush 152, e.g. the opposing surface 152b of the first bush. When the second bush 154 is disengaged from the first bush 152, e.g. in the second position, the internal surface 152a of the first bush may not be urged against the rod 142. The configuration depicted in Figure 2a may be described as an engaged configuration of the slide lock mechanism 150 and the configuration depicted in Figure 2b may be described as a disengaged configuration of the slide lock mechanism 150.

The bush actuator 156 may comprise a body portion 156a. The body portion 156a may extend about the rod 142 and may be configured to rotate about the central axis 142a of the rod. One of the bush actuator 156 and the second bush 154 may comprise a cam surface 162, and the other of the second bush 154 and the bush actuator 156 may comprise a cam follower 164 configured to engage the cam surface 162. The slide lock mechanism 150 may be configured such that the bush actuator 156 drives the second bush 154 by virtue of the engagement between the cam surface 162 and the cam follower 164. In particular, the body portion 156a of the bush actuator may be driven to rotate about the central axis 142a of the rod, in order to drive the second bush 154.

As illustrated, the cam surface 162 may comprise a groove formed in a surface, e.g. an outer surface 154b, of the second bush 154 or bush actuator 156, e.g. the body portion 156a of the bush actuator. In particular, the cam surface 162 may comprise a helical groove formed in the outer surface 154b of the second bush. The cam follower 164 may comprise a pin received within the groove. In the arrangement depicted in Figures 2a and 2b, the cam surface 162 is formed in a surface of the second bush 154 and the cam follower 164 is coupled to or formed on the bush actuator 156, e.g. the body portion 156a of the bush actuator.

The slide lock mechanism 150 further comprises a biasing element 158, such as a spring, e.g. a coil spring, configured to bias the second bush 154 into the first position, e.g. so that the slide lock mechanism is in the engaged configuration. As depicted in Figures 2a and 2b, the biasing element 158 may be arranged to act against the bush actuator 156, which in turn acts against the second bush 154 in order to bias the position of the second bush 154. In other arrangements, the biasing element 158 may act against the second bush 154 directly to bias the second bush into the first position.

The biasing element 158 may be spaced apart from the rod, e.g. in a radial direction relative to the central axis 142a of the rod. For example, as depicted in Figures 2a and 2b, the biasing element 158 may be disposed about the rod 142 and an internal diameter of the biasing element 158 may be greater than an external diameter of the rod, e.g. the outer surface 142b of the rod. The bush actuator 156 and/or the second bush 154 may be configured, e.g. shaped, to maintain the biasing element 158 in a position spaced apart from the rod 142. For example, as depicted in Figures 2a and 2b, the actuator 156 may comprise a spacing portion 156a arranged between the rod 142 and the biasing element 158 in a radial direction relative to the central axis 142a of the rod. The spacing portion 156a may prevent the biasing element 158 from contacting the rod 142. In other arrangements, the spacing portion may be provided on the second bush 154.

The first bush 152 may be manufactured from a material having a lower hardness than a material of the rod 142. For example, the rod 142 may be made from a metal material, such as steel, aluminium or an aluminium alloy, and the first bush 152 may be manufactured from a material having a lower hardness than the metal material. In one or more arrangements, the first bush 152 may be manufactured from a polymer material, such as nylon or polyethylene. The second bush 154 may be manufactured from the same material as the first bush 152 or from a different material. Similarly, the bush actuator 156 may be manufactured from the same material as the first bush 152, the second bush 154 or from a different material.

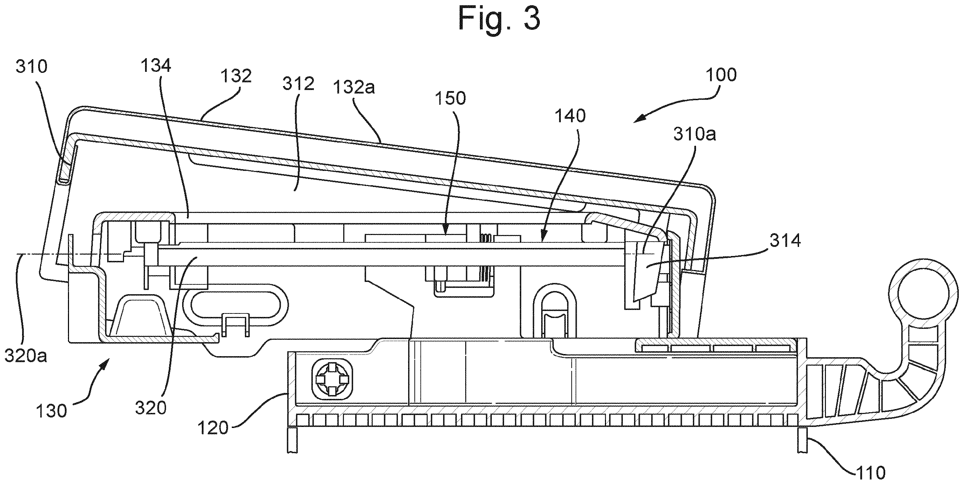

With reference to Figure 3, the console box assembly 100 may comprise a slide lock mechanism actuator 310 configured to be displaced by a user, e.g. by directly interacting with the slide lock mechanism actuator 310, to actuate the slide lock mechanism 150, e.g. the bush actuator 156 of the slide lock mechanism. In the arrangement shown in Figure 3, the slide lock mechanism actuator 310 is formed by the upper body 132 of the armrest. However, in other arrangements, the slide lock mechanism actuator 310 may be a separate element provided on the console box assembly 100. For example, the slide lock mechanism actuator may comprise a button, handle or lever coupled, e.g. movably coupled, to the upper or lower body 132, 134 of the armrest 130, or the carrier 120.

In the arrangement depicted, the slide lock mechanism actuator 310 is pivotally mounted on the lower body 134 of the armrest for pivotal movement about a slide lock mechanism actuator pivot axis 310a. As depicted in Figure 3, slide lock mechanism actuator pivot axis 310a may be arranged at an angle, e.g. perpendicular to, the elongate direction of the rod 142 and/or the sliding direction D₁.

The armrest 130 may further comprise one or more link members 320 for mechanically linking the slide lock mechanism actuator 310 and the bush actuator 156 in order to translate movement of the slide lock mechanism actuator 310 to move the bush actuator 156. In the arrangement shown in Figure 3, the link member comprises a torsion bar 320 mounted on the armrest 130. The torsion bar 320 may be pivotally coupled to the armrest 130 such that the torsion bar 320 is pivotable about a torsion bar pivot axis 320a. The torsion bar pivot axis 320a may be aligned with a direction having a component parallel with the elongate direction of the rod 142 and/or the sliding direction D₁. Accordingly, the torsion bar pivot axis 320a may be at an angle, e.g. perpendicular, to the slide lock mechanism actuator pivot axis 310a.

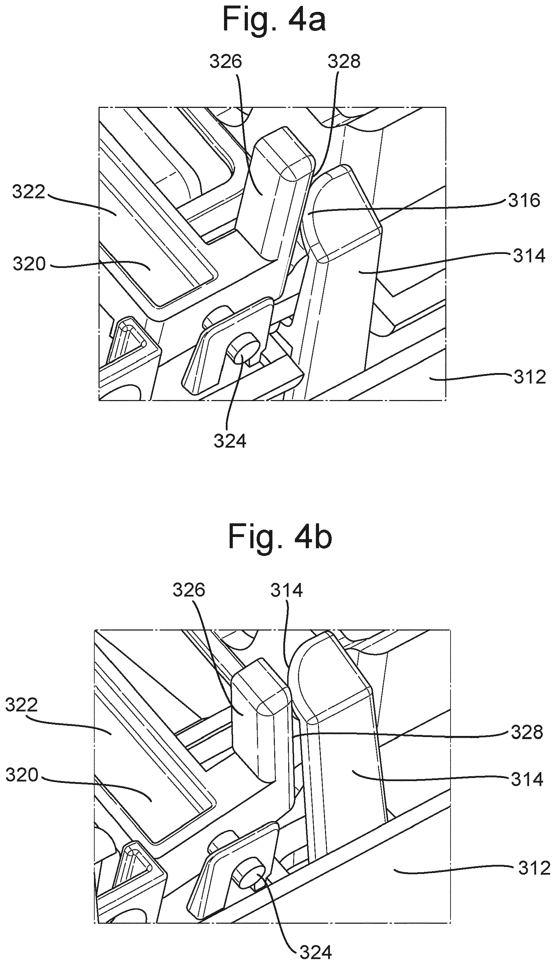

With reference to Figures 4a and 4b, the torsion bar 320 may comprise a ramp surface 328 and the slide lock mechanism actuator 310 may comprise a ramp engaging surface 316. The console box assembly 100, e.g. the slide lock mechanism actuator 310 and the torsion bar 320, may be configured such that the ramp engaging surface 316 engages the ramp surface 328 when the slide lock mechanism actuator is moved, e.g. pivoted.

The slide lock mechanism actuator 310 may comprise a body portion 312 and a tab 314 extending from the body portion in a direction with a component perpendicular to the slide lock mechanism actuator pivot axis 310a. The ramp engaging surface 316 may be formed on the slide lock mechanism actuator tab 314, e.g. at a distal end. As depicted, the ramp engaging surface 316 may be arcuate and may extend about an axis with a component perpendicular to the slide lock mechanism actuator pivot axis 310a. The ramp surface 328 may be arcuate, and may extend about an axis with a component perpendicular to the torsion bar pivot axis 320a.

The torsion bar 320 comprises a torsion body 322 which generally extends between first and second ends of the torsion bar 320 along the torsion bar pivot axis 320a. The torsion bar 320 further comprises spindle portions 324 extending from each end of the torsion body 322 along the torsion bar pivot axis 320a. The spindle portions 324 may be cylindrical portions of the torsion bar 320, having central axes aligned with the torsion bar pivot axis 320a. The spindle portions 324 of the torsion bar may be pivotally received within openings formed in the armrest 130. In this way, the torsion bar 320 may be supported for pivotal movement relative to the armrest 130 about the torsion bar pivot axis 320a. The torsion bar 320 may further comprise a tab body 326 extending from the torsion body in a direction with a component perpendicular to the torsion bar pivot axis 320a. The ramp surface 328 may be formed on the tab body 326. As depicted, the ramp surface 328 may extend along the tab body in the direction perpendicular to the torsion bar pivot axis 320a.

The ramp surface 328 and the ramp engaging surface 316 may be configured, e.g. shaped, such that engagement between the ramp surface 328 and the ramp engaging surface 316 causes the torsion bar 320 to pivot about the torsion bar pivot axis 320a, as shown in Figure 4b.

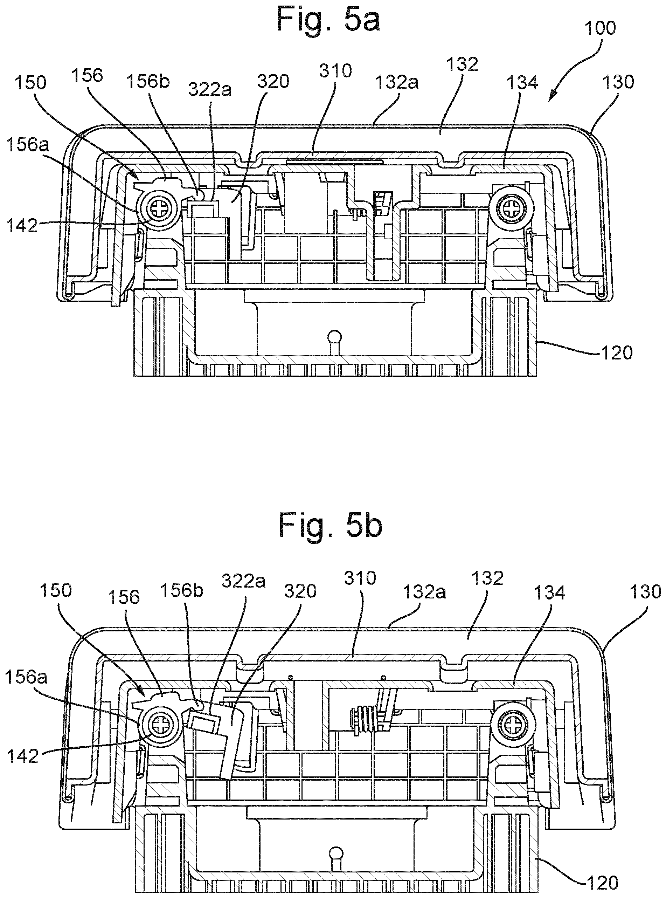

With reference to Figures 5a and 5b, the torsion bar 320 further comprises an actuator engaging surface 322a for engaging the bush actuator 156 to transmit movement of the torsion bar 320 to the bush actuator 156. The engaging surface 322a may be formed on the torsion body 322. For example, the engaging surface may be an upper surface of the torsion body. As illustrated in Figures 5a and 5b, the torsion bar 320 and the bush actuator 156 may be configured such that rotation of the torsion bar 320 causes rotation of the bush actuator 156 to move the second bush 154 from the first position into the second position, thereby disengaging the slide lock mechanism 150. Rotation of the torsion bar 320, e.g. under the action of the slide lock mechanism actuator 310, may thereby permit the armrest 130 to slide relative to the carrier 120.

As shown in Figures 5a and 5b, the bush actuator 156 may comprise an actuation arm 156b. The actuation arm 156b may extend radially outward from the body portion 156a of the bush actuator relative to the central axis 142a of the rod. The actuation arm 156b may be engaged by the actuator engaging surface 322a, such that movement of the torsion bar 320 acts against the actuation arm 156b to rotate the bush actuator 156.

The actuator engaging surface 322a may extend along the torsion bar 320 in a direction with a component parallel with the sliding direction D₁. The actuator engaging surface 322a may extend in the sliding direction D₁ by a distance greater than or equal to a maximum distance that the armrest 130 is configured to slide relative to the carrier 120. In this way, the bush actuator 156 may remain in contact with the actuator engaging surface 322a regardless of the position of the armrest 130 relative to the carrier 120.

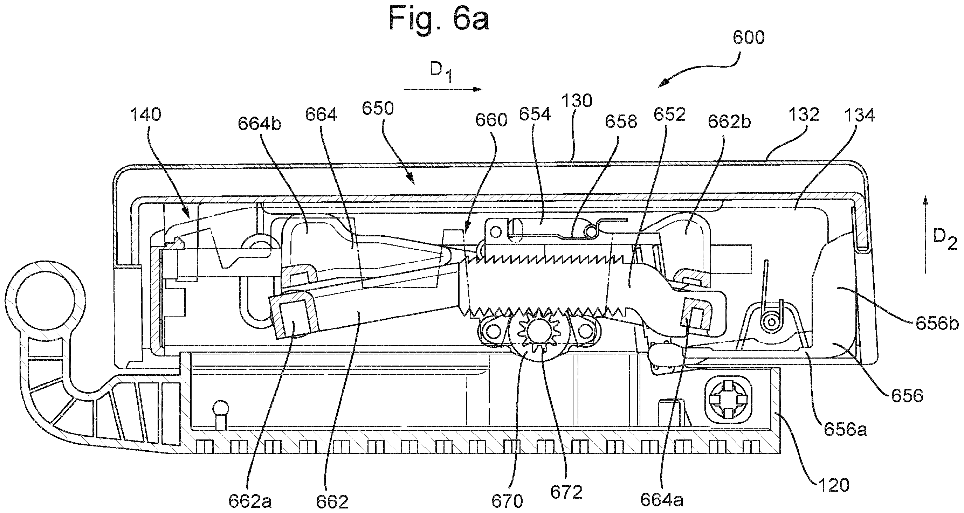

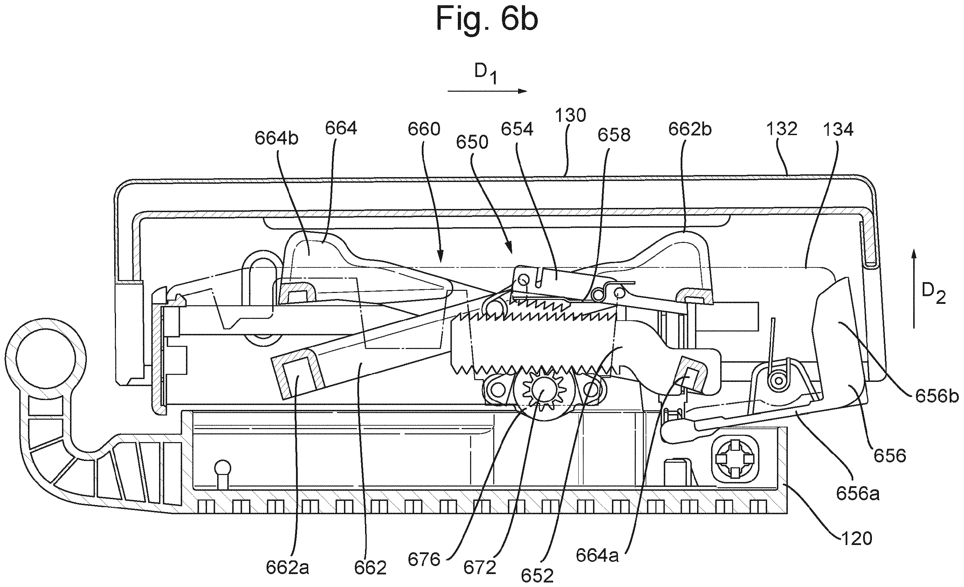

With reference to Figures 6a and 6b, a console box assembly 600 according to another arrangement of the present disclosure will now be described. The console box assembly 600 may be similar to the console box assembly 100 and features described above in relation to the console box assembly 100 may apply equally to the console box assembly 600. In particular, the console box assembly 600 comprises the armrest 130, having the upper body 132 and the lower body 134 and the carrier 120. The console box assembly 600 may comprise the mechanism 140, and may further comprise the slide lock mechanism 150.

The console box assembly 600 further comprises a height adjustment mechanism 650 for adjusting a position, e.g. height, of the upper body 132 of the armrest 130. In particular, the height adjustment mechanism may be for adjusting a distance, e.g. in a vertical direction, between the upper surface 132a of the upper body 132 and the lower body 134 of the armrest 130.

The height adjustment mechanism 650 comprises a first link member 662 and a second link member 664. The first and second link members 662, 664 each comprise a first end 662a, 664a and a second end 662b, 664b. The first and second link members 662, 664 are pivotally coupled to one another at a positions between the first and second ends of the link members. In other words, the first and second link members are configured to form a scissor linkage mechanism 660. The first and second link members 662, 644 may be housed inside the upper body 132 and/or the lower body 134.

The first end 662a of the first link member is pivotally coupled to the lower body 134 of the armrest and the first end 664a of the second link member is pivotally and slideably coupled to the lower body 134. The second ends 662b, 664b of the first and second link members are configured to contact the upper body 132 of the armrest and prevent the distance between the upper surface 132a of the upper body and the lower body 142, e.g. a lower extent of the lower body, reducing to less than a distance between the first and second ends of the first and second link members in the second direction D₂, e.g. the vertical direction. In the arrangement shown, the second direction D₂ comprises at least a component in a direction perpendicular to the sliding direction D₁

The height adjustment mechanism 650 further comprises a first rack 652 coupled to the first end 664a of the second link member and a second rack 654 coupled to the lower body 134. The first and second racks 652,654 are configured to engage one another in order to restrict movement of the first rack 652 relative to the second rack 654 in a direction in which the first end 664a of the second link member slides relative to the lower body 134. For example, the first and/or second rack 652, 654 may comprise a plurality of teeth spaced along the respective racks in the direction in which the first end 664a of the second link member slides relative to the lower body 134.

The height adjustment mechanism 650 further comprises a rack actuator 656 for selectively disengaging the second rack 654 from the first rack 652, e.g. in order to permit the first end 664a of the second link member to slide relative to the lower body 134.

As depicted in Figures 6a and 6b, the rack actuator 656 may comprise a lever portion 656a pivotally coupled to the lower body 134 of the armrest, and a button portion 656b to be displaced by a user of the armrest in order to pivot the lever arm portion 656a to thereby displace the second rack 654 to disengage from the first rack 652. As illustrated, the second rack 654 may be pivotal mounted on the lower body 134 and may be pivoted relative to the first rack 652 by actuating the rack actuator 656 to disengage from the first rack 652. The second rack 654 may be biased into a position in which the second rack engages the first rack 652. For example, the height adjustment mechanism 650 may comprise one or more biasing members, such as springs 658, configured to bias the second rack 654 to engage the first rack 652.

The height adjustment mechanism 650 may further comprise a damper 670 configured to damp, e.g. provide resistance against, movement of the upper body 132 relative to the lower body 134 in the second direction D₂. As depicted, the damper 670 may be a rotational damper and may comprise a gear wheel 672 having teeth engaged with teeth of the first rack 652. The damper 670 may be coupled, e.g. fixedly coupled, to the lower body 134. When the first rack 652 moved relative to the lower body, e.g. together with the first end 664a of the second link member. The gear wheel 672 of the damper may be rotated by virtue of its engagement with the teeth of the first rack 652 and movement of lower body relative to the upper body may thereby be damped.

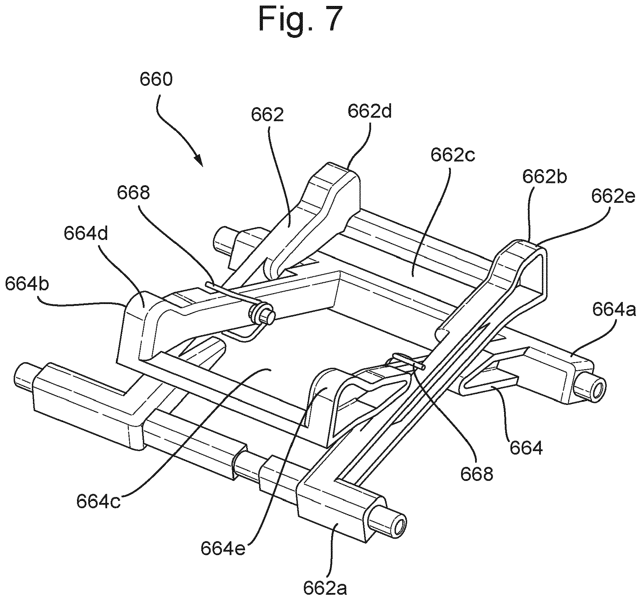

As depicted in Figure 7, the first link member 662 comprises an opening 662c formed between the first and second ends 662a, 664b of the first link member. The second member may extend through the opening 662c and the first and second link members 662, 664 may be pivotally coupled together at the opening. The second link member 664 may similarly comprise an opening 664c formed between the first and second ends 664a, 664b of the second link member. In some arrangements, the first link member may extend through the opening 664c and the first and second link members 662, 664 may be pivotally coupled together at the opening 664c.

As illustrated, the first link member 662 may comprise two or more contact surface portions 662d, 662e formed at the second end 662b of the first link member. The two or more contact surface portions may be arranged to contact the upper part 132 of the armrest 130 at laterally spaced positions on the upper part 132. For example, two or more contact surface portions may be arranged to contact the upper part 132 of the armrest 130 at opposing lateral sides of the upper part 132. The laterally spaced apart positions may be spaced apart in a direction perpendicular to the sliding direction D₁. The second link member 664 may similarly comprise two or more contact surface portions 664d, 664e formed at the second end 664b of the second link member. The two or more contact surface portions may be arranged to contact the upper part 132 of the armrest 130 at laterally spaced positions on the upper part 132. For example, the two or more contact surface portions may be arranged to contact the upper part 132 of the armrest 130 at opposing lateral sides of the upper part 132.

As depicted in Figure 7, the height adjustment mechanism 650 may further comprise one or more biasing elements 668, such as coil springs, for biasing the first and second link members 662, 664 to pivot relative to one another in order to increase the distance between the first and second ends 662a, 664a, 662b, 664b of the first and second link members respectively in the second direction D1, e.g. the height direction.

In the arrangement depicted in Figures 6a and 6b, and as described above, the height adjustment mechanism 650 is arranged such that the second ends of the first and second link members are spaced apart in a longitudinal direction of the armrest 130, e.g. a direction parallel with a direction in which a user faces when using the armrest and/or the sliding direction of the armrest. However, in other arrangements, the height adjustment mechanism may be oriented on the console box assembly 600, such that the second ends of the first and second link members are spaced apart in a lateral direction of the armrest, e.g. a direction perpendicular to a direction in which a user faces when using the armrest and/or the sliding direction of the armrest. In such arrangements, it will be appreciated that the directions in which the other parts of the height adjustment mechanism move and are spaced apart from one another in would be reoriented accordingly. For example, the two or more contact surface portions on the first and second link members may be arranged to contact the upper part 132 of the armrest 130 at positions on the upper part 132 spaced apart in the longitudinal direction of the armrest 130.

## Claims

1. A console box assembly (100) comprising a carrier (120) and an armrest (130) configured to slide relative to a carrier, the console box assembly further comprising:
a rod (142) coupled to one of the carrier and the armrest, wherein the rod is elongate in a direction in which the armrest is configured to slide relative to the carrier; and
a slide lock mechanism (150) coupled to the other of the carrier and the armrest wherein the slide lock mechanism is configured to selectively engage the rod in order to restrict sliding of the armrest relative to the carrier, **characterized in that** the slide lock structure comprises:
a first bush (152) disposed about the rod, the first bush comprising an internal surface (152a) configurable to contact the rod, and a slope surface (152b) on opposite side of the first bush from the internal surface;
a second bush (154) configurable to engage the first bush at the slope surface in order to urge the internal surface of the first bush against the rod;
an actuator (156) to drive the second bush between a first position, in which the second bush engages the first bush and urges the internal surface of the first bush against the rod, and a second position, in which the second bush is disengaged from or less engaged with the first bush; and
a biasing element (158) configured to bias the second bush into the first position

2. The console box assembly of claim 1, wherein the first bush is made from a material having a lower hardness than a material of the rod.

3. The console box assembly of claim 1 or 2, wherein the biasing element is spaced apart from the rod and does not contact the rod.

4. The console box assembly according to any of the preceding claims, wherein one of the second bush and the actuator comprises a cam surface (162) and the other of the second bush and the actuator comprise a cam follower (164) to engage the cam surface wherein the actuator drives the second bush between the first and second positions by virtue of the engagement between the cam surface and the cam follower.

5. The console box assembly of claim 4, wherein the cam surface comprises a groove formed in a surface, e.g. an outer surface, (154b, 156a) of the second bush or actuator

6. The console box assembly of claim 5, wherein the cam follower comprises a pin received within the groove.

7. The console box assembly according to any of the preceding claims further comprising a slide lock mechanism actuator (310) configured to be displaced by a user and actuate the actuator.

8. The console box assembly according to claim 7 further comprising a torsion bar (320) mounted on the armrest for pivotal movement about a torsion bar pivot axis (320a), axis, wherein the torsion bar is configured to translate movement of the slide lock mechanism actuator to actuate the actuator.

9. The console box assembly of claim 8, wherein the torsion bar pivot axis is aligned with a direction having a component parallel with the elongate direction of the rod.

10. The console box assembly of claim 8 or 9, wherein the torsion bar comprises a ramp surface (320) and the slide lock mechanism actuator comprises a ramp engaging surface (316), wherein the ramp engaging surface is configured to engage the ramp surface when the slide lock mechanism actuator is moved, to urge the torsion bar to pivot about torsion bar pivot axis.

11. The console box assembly of claim 10, wherein the ramp surface and the ramp engagement surface comprise arcuate surfaces.

12. The console box assembly of claim 10 or 11, wherein the slide lock mechanism actuator comprises a body portion (312) mounted on the armrest for pivotal movement about a slide lock mechanism actuator pivot axis, wherein the ramp engagement surface is formed on a tab (314) extending from a body portion in a direction with a component perpendicular to the slide lock mechanism actuator pivot axis (310a).

13. The console box assembly of claims 11 and 12, wherein the ramp engagement surface is arcuate about an axis with a component perpendicular to the slide lock mechanism actuator pivot axis.

14. The console box assembly of claim 12 or 13, wherein the slide lock mechanism actuator pivot axis is at an angle, e.g. perpendicular, relative to the torsion bar pivot axis.

15. The console box assembly of any of claims 8 to 14, wherein the ramp surface is arcuate about an axis with a component perpendicular to the torsion bar pivot axis.

16. The console box assembly of any of claims 8 to 15, wherein the torsion bar comprises an actuator engaging surface (322a) for engaging the actuator to transmit the translated movement to the actuator, wherein the actuator engaging surface extends along the torsion bar in a direction (Dᵢ) with a component parallel with the direction in which the armrest is configured to slide relative to the carrier.

17. The console box assembly of claim 16, wherein the actuator engaging surface extends along the torsion bar in the direction with a component parallel to the direction in which the armrest is configured to slide by a distance greater than a distance that the armrest slides.

## Patentansprüche

1. Konsolenkastenanordnung (100), umfassend einen Träger (120) und eine Armlehne (130), die dazu konfiguriert ist, relativ zu einem Träger zu gleiten, wobei die Konsolenkastenanordnung ferner Folgendes umfasst:
eine Stange (142), die entweder mit dem Träger oder der Armlehne gekoppelt ist, wobei die Stange in eine Richtung verläuft, in der die Armlehne dazu konfiguriert ist, relativ zu dem Träger zu gleiten; und
einen Gleitverriegelungsmechanismus (150), der mit dem anderen von dem Träger und der Armlehne gekoppelt ist, wobei der Gleitverriegelungsmechanismus dazu konfiguriert ist, wahlweise mit der Stange in Eingriff zu treten, um das Gleiten der Armlehne relativ zu dem Träger einzuschränken, **dadurch gekennzeichnet, dass** die Gleitverriegelungsstruktur Folgendes umfasst:
eine erste Buchse (152), die um die Stange herum angeordnet ist, wobei die erste Buchse eine Innenfläche (152a), die dazu konfigurierbar ist, die Stange zu berühren, und eine Neigungsfläche (152b) auf der der Innenfläche gegenüberliegenden Seite der ersten Buchse umfasst;
eine zweite Buchse (154), die dazu konfigurierbar ist, mit der ersten Buchse an der Neigungsfläche in Eingriff zu treten, um die Innenfläche der ersten Buchse gegen die Stange zu drücken;
einen Aktuator (156), um die zweite Buchse zwischen einer ersten Position, in der die zweite Buchse mit der ersten Buchse in Eingriff steht und die Innenfläche der ersten Buchse gegen die Stange drückt, und einer zweiten Position, in der die zweite Buchse von der ersten Buchse gelöst ist oder weniger mit ihr in Eingriff steht, zu bewegen; und
ein Vorspannelement (158), das dazu konfiguriert ist, die zweite Buchse in die erste Position vorzuspannen.

2. Konsolenkastenanordnung nach Anspruch 1, wobei die erste Buchse aus einem Material besteht, das eine geringere Härte aufweist als ein Material der Stange.

3. Konsolenkastenanordnung nach Anspruch 1 oder 2, wobei das Vorspannelement von der Stange beabstandet ist und die Stange nicht berührt.

4. Konsolenkastenanordnung nach einem der vorhergehenden Ansprüche, wobei das eine von der zweiten Buchse oder dem Aktuator eine Nockenfläche (162) umfasst und das andere von der zweiten Buchse und dem Aktuator einen Nockenmitnehmer (164) umfasst, um mit der Nockenfläche in Eingriff zu treten, wobei der Aktuator die zweite Buchse zwischen der ersten und der zweiten Position aufgrund des Eingriffs zwischen der Nockenfläche und dem Nockenmitnehmer antreibt.

5. Konsolenkastenanordnung nach Anspruch 4, wobei die Nockenfläche eine Nut umfasst, die in einer Oberfläche, z. B. einer Außenfläche, (154b, 156a) der zweiten Buchse oder des Aktuators ausgebildet ist.

6. Konsolenkastenanordnung nach Anspruch 5, wobei der Nockenmitnehmer einen Stift umfasst, der in der Nut aufgenommen ist.

7. Konsolenkastenanordnung nach einem der vorhergehenden Ansprüche, ferner umfassend einen Gleitverriegelungsmechanismus-Aktuator (310), der dazu konfiguriert ist, von einem Benutzer verschoben zu werden und den Aktuator zu betätigen.

8. Konsolenkastenanordnung nach Anspruch 7, ferner umfassend einen Torsionsstab (320), der an der Armlehne für eine Schwenkbewegung um eine Torsionsstab-Drehachse (320a) montiert ist, wobei der Torsionsstab dazu konfiguriert ist, die Bewegung des Gleitverriegelungsmechanismus-Aktuators zu übersetzen, um den Aktuator zu betätigen.

9. Konsolenkastenanordnung nach Anspruch 8, wobei die Torsionsstab-Drehachse in einer Richtung ausgerichtet ist, die eine Komponente parallel zur Längsrichtung der Stange aufweist.

10. Konsolenkastenanordnung nach Anspruch 8 oder 9, wobei der Torsionsstab eine Rampenfläche (320) umfasst und der Gleitverriegelungsmechanismus-Aktuator eine Rampeneingriffsfläche (316) umfasst, wobei die Rampeneingriffsfläche dazu konfiguriert ist, mit der Rampenfläche in Eingriff zu treten, wenn der Gleitverriegelungsmechanismus-Aktuator bewegt wird, um den Torsionsstab zum Schwenken um die Torsionsstab-Drehachse zu drängen.

11. Konsolenkastenanordnung nach Anspruch 10, wobei die Rampenfläche und die Rampeneingriffsfläche bogenförmige Flächen umfassen.

12. Konsolenkastenanordnung nach Anspruch 10 oder 11, wobei der Gleitverriegelungsmechanismus-Aktuator einen Gehäuseabschnitt (312) umfasst, der an der Armlehne für eine Schwenkbewegung um eine Drehachse des Gleitverriegelungsmechanismus-Aktuators montiert ist, wobei die Rampeneingriffsfläche an einer Lasche (314) ausgebildet ist, die sich von einem Gehäuseabschnitt in einer Richtung mit einer Komponente senkrecht zur Drehachse des Gleitverriegelungsmechanismus-Aktuators (310a) erstreckt.

13. Konsolenkastenanordnung nach Anspruch 11 und 12, wobei die Rampeneingriffsfläche um eine Achse gekrümmt ist, deren Komponente senkrecht zur Drehachse des Gleitverriegelungsmechanismus-Aktuators ist.

14. Konsolenkastenanordnung nach Anspruch 12 oder 13, wobei die Drehachse des Gleitverriegelungsmechanismus-Aktuators in einem Winkel, z. B. senkrecht, relativ zur Torsionsstab-Drehachse verläuft.

15. Konsolenkastenanordnung nach einem der Ansprüche 8 bis 14, wobei die Rampenfläche um eine Achse mit einer Komponente senkrecht zur Torsionsstab-Drehachse gekrümmt ist.

16. Konsolenkastenanordnung nach einem der Ansprüche 8 bis 15, wobei der Torsionsstab eine Aktuatoreingriffsfläche (322a) zum Eingreifen in den Aktuator umfasst, um die übersetzte Bewegung an den Aktuator zu übertragen, wobei sich die Aktuatoreingriffsfläche entlang des Torsionsstabs in einer Richtung (Dᵢ) mit einer Komponente parallel zu der Richtung erstreckt, in der die Armlehne dazu konfiguriert ist, relativ zu dem Träger zu gleiten.

17. Konsolenkastenanordnung nach Anspruch 16, wobei sich die Aktuatoreingriffsfläche entlang des Torsionsstabs in der Richtung mit einer Komponente parallel zu der Richtung erstreckt, in der die Armlehne dazu konfiguriert ist, um einen Abstand zu gleiten, der größer ist als ein Abstand, den die Armlehne gleitet.

## Revendications

1. Ensemble boîte de console (100) comprenant un support (120) et un accoudoir (130) conçu pour coulisser par rapport à un support, l'ensemble boîte de console comprenant en outre :
une tige (142) accouplée à l'un du support et de l'accoudoir, dans lequel la tige est allongée dans une direction dans laquelle l'accoudoir est conçu pour coulisser par rapport au support ; et
un mécanisme de verrouillage à glissière (150) accouplé à l'autre du support et de l'accoudoir, dans lequel le mécanisme de verrouillage à glissière est conçu pour venir sélectivement en prise avec la tige afin de restreindre le coulissement de l'accoudoir par rapport au support, **caractérisé en ce que** la structure de verrouillage à glissière comprend :
une première douille (152) disposée autour de la tige, la première douille comprenant une surface interne (152a) pouvant être conçue pour entrer en contact avec la tige, et une surface inclinée (152b) sur le côté opposé de la première douille par rapport à la surface interne ;
une seconde douille (154) pouvant être conçue pour venir en prise avec la première douille au niveau de la surface inclinée afin de solliciter la surface interne de la première douille contre la tige ;
un actionneur (156) pour entraîner la seconde douille entre une première position, dans laquelle la seconde douille met en prise la première douille et sollicite la surface interne de la première douille contre la tige, et une seconde position, dans laquelle la seconde douille est libérée de la première douille ou moins en prise avec celle-ci ; et
un élément de sollicitation (158) conçu pour solliciter la seconde douille dans la première position.

2. Ensemble boîte de console selon la revendication 1, dans lequel la première douille est réalisée en un matériau de dureté inférieure à celle de la tige.

3. Ensemble boîte de console selon la revendication 1 ou 2, dans lequel l'élément de sollicitation est espacé de la tige et n'entre pas en contact avec la tige.

4. Ensemble boîte de console selon l'une quelconque des revendications précédentes, dans lequel l'un de la seconde douille et de l'actionneur comprend une surface de came (162) et l'autre de la seconde douille et de l'actionneur comprennent un suiveur de came (164) pour venir en prise avec la surface de came, dans lequel l'actionneur entraîne la seconde douille entre les première et seconde positions grâce à la mise en prise entre la surface de came et le suiveur de came.

5. Ensemble boîte de console selon la revendication 4, dans lequel la surface de came comprend une rainure formée dans une surface, par exemple une surface extérieure (154b, 156a) de la seconde douille ou de l'actionneur.

6. Ensemble boîte de console selon la revendication 5, dans lequel le suiveur de came comprend une broche reçue à l'intérieur de la rainure.

7. Ensemble boîte de console selon l'une quelconque des revendications précédentes, comprenant en outre un actionneur de mécanisme de verrouillage à glissière (310) conçu pour être déplacé par un utilisateur et actionner l'actionneur.

8. Ensemble boîte de console selon la revendication 7, comprenant en outre une barre de torsion (320) montée sur l'accoudoir pour un mouvement de pivotement autour d'un axe de pivotement de barre de torsion (320a), dans lequel la barre de torsion est conçue pour traduire le mouvement de l'actionneur du mécanisme de verrouillage coulissant pour actionner l'actionneur.

9. Ensemble boîte de console selon la revendication 8, dans lequel l'axe de pivotement de barre de torsion est aligné avec une direction ayant une composante parallèle à la direction allongée de la tige.

10. Ensemble boîte de console selon la revendication 8 ou 9, dans lequel la barre de torsion comprend une surface de rampe (320) et l'actionneur de mécanisme de verrouillage à glissière comprend une surface de mise en prise de rampe (316), dans lequel la surface de mise en prise de rampe est conçue pour venir en prise avec la surface de rampe lorsque l'actionneur de mécanisme de verrouillage à glissière est déplacé, pour amener la barre de torsion à pivoter autour de l'axe de pivotement de barre de torsion.

11. Ensemble boîte de console selon la revendication 10, dans lequel la surface de rampe et la surface de mise en prise de rampe comprennent des surfaces arquées.

12. Ensemble boîte de console selon la revendication 10 ou 11, dans lequel l'actionneur de mécanisme de verrouillage coulissant comprend une partie de corps (312) montée sur l'accoudoir pour un mouvement de pivotement autour d'un axe de pivotement d'actionneur de mécanisme de verrouillage coulissant, dans lequel la surface de mise en prise de rampe est formée sur une languette (314) s'étendant à partir d'une partie de corps dans une direction avec une composante perpendiculaire à l'axe de pivotement d'actionneur de mécanisme de verrouillage coulissant (310a).

13. Ensemble boîte de console selon l'une quelconque des revendications 11 à 12, dans lequel la surface de mise en prise de rampe est arquée autour d'un axe avec une composante perpendiculaire à l'axe de pivotement d'actionneur de mécanisme de verrouillage à glissière.

14. Ensemble boîte de console selon la revendication 12 ou 13, dans lequel l'axe de pivotement d'actionneur de mécanisme de verrouillage à glissière est incliné, par exemple perpendiculaire, par rapport à axe de pivotement de barre de torsion.

15. Ensemble boîte de console selon l'une quelconque des revendications 8 à 14, dans lequel la surface de rampe est arquée autour d'un axe dont la composante est perpendiculaire à l'axe de pivotement de barre de torsion.

16. Ensemble boîte de console selon l'une quelconque des revendications 8 à 15, dans lequel la barre de torsion comprend une surface de mise en prise d'actionneur (322a) pour venir en prise avec l'actionneur pour transmettre le mouvement de translation à l'actionneur, dans lequel la surface de mise en prise d'actionneur s'étend le long de la barre de torsion dans une direction (Dᵢ) avec une composante parallèle à la direction dans laquelle l'accoudoir est conçu pour coulisser par rapport au support.

17. Ensemble boîte de console selon la revendication 16, dans lequel la surface de mise en prise d'actionneur s'étend le long de la barre de torsion dans la direction avec une composante parallèle à la direction dans laquelle l'accoudoir est conçu pour coulisser sur une distance supérieure à une distance de coulissement de l'accoudoir.
